# EUROPÄISCHE PATENTSCHRIFT

(11) **EP 1 624 322 B1**
(45) Veröffentlichungstag und Bekanntmachung des Hinweises auf die Patenterteilung: **28.09.2011**
(21) Anmeldenummer: 05016032.4
(22) Anmeldetag: 23.07.2005
(51) Int. Cl.: G01V 8/10

(54) **Optischer Sensor**
Optical sensor
Capteur optique

(30) Priorität: 06.08.2004 DE 102004038257
(43) Veröffentlichungstag der Anmeldung: 08.02.2006
(73) Patentinhaber: Leuze electronic GmbH + Co KG, 73277 Owen/Teck (DE)
(72) Erfinder: Droemer, Jörg, 72574 Bad Urach-Wittlingen (DE)
(74) Vertreter: Ruckh, Rainer Gerhard

(56) Entgegenhaltungen:
- EP-A- 0 384 353
- DE-A1- 4 215 272
- DE-A1- 10 021 590
- DE-U1- 20 111 588
- GB-A- 626 530
- US-A- 4 115 701
- US-A- 4 948 447
- PATENT ABSTRACTS OF JAPAN Bd. 010, Nr. 154 (P-463), 4. Juni 1986 (1986-06-04) & JP 61 009601 A (HITACHI SEISAKUSHO KK), 17. Januar 1986 (1986-01-17)

## Beschreibung

Die Erfindung betrifft einen optischen Sensor gemäß dem Oberbegriff des Anspruchs 1.

Derartige optische Sensoren dienen zur Erfassung von Objekten in einem Überwachungsbereich. Dabei sind diese optischen Sensoren vorzugsweise als Distanzsensoren ausgebildet, mittels derer die Distanzen eines Objektes im Überwachungsbereich bestimmt werden können.

Aus der DE 198 50 270 A1 ist ein nach dem Triangulationsprinzip arbeitender Distanzsensor bekannt. Dieser Distanzsensor weist wenigstens einen Sendelichtstrahlen emittierten Sender und einen an eine Auswerteeinheit angeschlossenen Empfangslichtstrahlen empfangenen Empfänger auf, welcher als CCD-Zeile mit mehreren linear angeordneten photoempfindlichen Elementen ausgebildet ist.

Zur Ermittlung der Objektdistanz wird der Flächenschwerpunkt des Lichtflecks der Empfangslichtstrahlen auf der CCD-Zeile ermittelt.

Der Sender und der Empfänger dieses Distanzsensors liegen in Abstand nebeneinander. Dem Sender ist eine Sendeoptik zur Strahlformung der Sendelichtstrahlen nachgeordnet. Dem Empfänger ist eine Empfangsoptik zur Fokussierung der Empfangslichtstrahlen vorgeordnet.

Durch den Basisabstand zwischen Sender und Empfänger ist eine Detektion von Objekten in sehr geringem Abstand zum optischen Sensor nicht möglich. Weiterhin bedingt die getrennte Anordnung von Sender und Empfänger mit jeweils einer separaten Senderoptik und Empfangsoptik ein relativ großes Bauvolumen und eine hohe Anzahl einzelner optischer Komponenten, was zu einer unerwünschten Erhöhung der Herstellkosten führt.

Die DE 100 21 590 A1 betrifft eine optoelektronische Vorrichtung zur Detektion von Objekten in einem Überwachungsbereich mit einem Sendelichtstrahlen emittierenden Sender und einem Empfangslichtstrahlen empfangenden Empfänger, welche an einem Ende des Überwachungsbereichs angeordnet sind. Ein Reflektor ist am gegenüberliegenden Ende des Überwachungsbereichs angeordnet. Zudem ist ein Oszillator zur Modulation der Sendelichtstrahlen vorgesehen. Das Taktsignal des Oszillators und das Empfangssignal am Ausgang des Empfängers ist einem Synchrongleichrichter zugeführt. Das Ausgangssignal des Synchrongleichrichters wird mit wenigstens einem Schwellwert zur Generierung eines binären Schaltsignals bewertet, wobei die Schaltzustände des Schaltsignals angeben, ob sich ein Objekt im Überwachungsbereich befindet oder nicht.

Dem Sender der Vorrichtung ist eine Sendeoptik zugeordnet. Dem Empfänger ist eine Empfangsoptik zugeordnet. Um eine koaxiale Strahlführung der Sende- und Empfangslichtstrahlen zu erzielen, ist die Sendeoptik in einer zentralen Ausnehmung der Empfangsoptik gelagert.

Die DE 201 11 588 U1 betrifft eine Befestigungsvorrichtung für einen optischen Sensor, mit einem Sendelichtstrahlen emittierenden Sender und einem Empfangslichtstrahlen empfangenden Empfänger, wobei der Sensor in wenigstens einem Gehäuse integriert ist, welches wenigstens abschnittsweise kugelförmig ausgebildet ist, und wobei als Befestigungsmittel Aufnahmen vorgesehen sind, an welchen kugelförmige Abschnitte des Gehäuses anliegen, so dass das Gehäuse zu Justagezwecken bezüglich der Aufnahmen drehbar und in vorgegebenen Drehstellungen an diesen fixierbar ist.

Zur Erzielung einer koaxialen Strahlführung der Sende- und Empfangslichtstrahlen kann eine dem Sender zugeordnete Sendeoptik in einer zentralen Ausnehmung einer dem Empfänger zugeordneten Empfangsoptik angeordnet sein. Die US 4,115,701 betrifft einen photoelektrischen Sensor mit einem Sendelichtstrahlen empfangenden Sender und einem Empfangslichtstrahlen empfangenden Empfänger. Dem Sender ist eine Sendeoptik zugeordnet. Dem Empfänger ist eine Empfangsoptik zugeordnet. Zur Erzielung einer koaxialen Strahlführung der Sende- und Empfangslichtstrahlen sind die Sende- und Empfangsoptik hintereinander liegend angeordnet.

Die DE 42 15 272 A1 betrifft einen Distanzsensor mit einem Sendelichtstrahlen emittierenden Sender und einem Empfangslichtstrahlen empfangenden Empfänger. Der Sender und der Empfänger sind in Abstand nebeneinanderliegend angeordnet, wobei dem Sender eine Sendeoptik und dem Empfänger eine Empfangsoptik zugeordnet ist.

Der Erfindung liegt die Aufgabe zugrunde, einen optischen Sensor der eingangs genannten Art bereitzustellen, mit welchem bei geringem konstruktivem Aufwand eine sichere Objektdetektion ermöglicht wird.

Zur Lösung dieser aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen optischen Sensor zum Erkennen von Objekten in einem Überwachungsbereich. Dieser besteht aus einem Sendelichtstrahlen emittierenden Sender, einem Empfangslichtstrahlern empfangenden Empfänger und einer Auswerteeinheit zur Generierung eines Objektfeststellungssignals in Abhängigkeit der Empfangssignale am Ausgang des Empfängers. Der Sender und der Empfänger sind koaxial angeordnet und einer Sende- und Empfangsoptik zugeordnet. Der zentrale Bereich der Sende- und Empfangsoptik dient zur Kollimation der Sendelichtstrahlen und der äußere Bereich zur Fokussierung der Empfangslichtstrahlen auf den Empfänger. Die Sende- und Empfangsoptik besteht aus einem Glassubstrat mit einer darauf aufgebrachten Schichtstruktur aus Kunststoff.

Da mit der Sende- und Empfangsoptik sowohl eine Strahlformung der Sendelichtstrahlen als auch eine Fokussierung der Empfangslichtstrahlen erfolgen kann, können separate Optikelemente zur Gewährleistung dieser Funktionen entfallen, wodurch auch eine Reduzierung der mechanischen Komponenten zur Fixierung und Halterung der Optikelemente erzielt wird. Damit weist der erfindungsgemäße optische Sensor einen einfachen und kostengünstigen Aufbau auf

Ein weiterer Vorteil besteht darin, dass mittels der Sende- und Empfangsoptik ein koaxialer Strahlverlauf der Sendelichtstrahlen und der Empfangslichtstrahlen im Überwachungsbereich erzielt wird, wodurch auch eine Objekterkennung im Nahbereich, das heißt von sehr dicht vor dem optischen Sensor angeordneten Objekten, ermöglicht wird.

Ein wesentlicher Vorteil des erfindungsgemäßen optischen Sensors besteht in der Ausbildung der Sende- und Empfangsoptik in Form eine Glassubstrats und einer aus Kunststoff bestehenden Schichtstruktur. Die so ausgebildete Sende- und Empfangsoptik erlaubt bei geringen Herstellungskosten eine optimierte Führung und Strahlformung der Sendelichtstrahlen und der Empfangslichtstrahlen.

Das Glassubstrat bildet dabei vorteilhaft ein sphärisches Optikelement, beispielsweise in Form einer Plankonvexlinse. Die Schichtstruktur aus Kunststoff dient dagegen zur Ausbildung asphärischer optischer Elemente. Dabei ist die Dicke der Schichtstruktur und damit deren Volumen erheblich kleiner als die Dicke beziehungsweise das Volumen des Glassubstrats.

Das Glassubstrat als sphärisches Objektelement kann im Gegensatz zu entsprechenden Kunststofflinsen auch bei großen Abmessungen mit geringem Kostenaufwand hochgenau und damit mit hoher optischer Qualität hergestellt werden. Da der Kunststoffanteil in Form der Schichtstruktur nur eine dünne Schicht auf dem Glassubstrat bildet und damit kein großes Volumen umfasst, kann dieser mit hoher Präzision auf dem Glassubstrat angebracht werden und weist ebenfalls gute optische Eigenschaften auf. Besonders vorteilhaft hierbei ist, dass Segmente der Schichtstruktur als asphärische Optikelemente ausgebildet sein können. Dies stellt im Vergleich zur Ausbildung eines Glassubstrats mit asphärischen Eigenschaften eine wesentliche Reduzierung der Herstellungskosten der Sende- und Empfangsoptik dar.

In einer besonders vorteilhaften Ausführungsform erfolgt die Aufbringung der Schichtstruktur auf das Glassubstrat gemäß einem Replica-Verfahren, wobei als Kunststoff zur Ausbildung der Schichtstruktur Diacryl verwendet wird. Dieses Verfahren gewährleistet eine rationelle und präzise Herstellung der Schichtstruktur, in welcher insbesondere asphärische Segmente eingearbeitet werden können. Diese asphärischen Segmente dienen bevorzugt als Kollimatorzone für die Sendelichtstrahlen und Nah- und Fembereichszonen für die Empfangslichtstrahlen, wobei durch die Nah- und Fembereichszonen gezielt von Objekten in unterschiedlichen Distanzen zurückreflektiertes Empfangslicht gezielt auf den Empfänger fokussiert werden kann.

Ein weiterer Vorteil der erfindungsgemäßen Sende- und Empfangsoptik besteht darin, dass das Glassubstrat, welches den größten Volumenanteil der Sende- und Empfangsoptik bildet, aufgrund seiner Materialeigenschaften eine geringe Temperaturdrift aufweist. Die Temperaturdriften in der dünnen Schichtstruktur beeinflussen die optischen Eigenschaften der gesamten Sende- und Empfangsoptik somit nur in einem äußerst geringen Ausmaß.

In einer besonders vorteilhaften Ausführungsform bildet die Sende- und Empfangsoptik zugleich das Austrittsfenster für die Sendelichtstrahlen und ist hierzu in der Frontwand des Gehäuses des optischen Sensors integriert. Separate Elemente zur Ausbildung eines Austrittsfensters können somit entfallen. Zweckmäßigerweise bildet dabei das Glassubstrat als temperaturunempfindlicher Bestandteil der Send- und Empfangsoptik dessen an der Außenseite des Gehäuses liegenden Teil, während die temperatur-empfindliche Schichtstruktur an der Innenseite liegt.

Der erfindungsgemäße optische Sensor kann generell als binäres Schaltgerät, das heißt als Lichttaster, Reflexionslichtschranke oder dergleichen ausgebildet sein. In diesem Fall wird im optischen Sensor als Objektfeststellungssignal ein binäres Schaltsignal generiert, dessen Schaltzustände angeben, ob sich im Objekt ein Überwachungsbereich befindet oder nicht. Weiterhin kann der optische Sensor als Distanzsensor ausgebildet sein, wobei in diesem Fall als Objektfeststellungssignal analoge Distanzwerte und/oder binäre Schaltsignale ausgegeben werden können. In diesem Fall geben die Schaltzustände des Schaltsignals an, ob sich ein Objekt in einem vorgegebenen Distanzbereich befindet oder nicht.

Die Erfindung wird im Nachstehenden anhand der Zeichnungen erläutert. Es zeigen:
- Figur 1: Schematische Darstellung der optischen Komponenten eines als Distanzsensors ausgebildeten Optischen Sensors
- Figur 2: Querschnitt durch die Sende- und Empfangsoptik des Optischer Sensor gemäß Figur 1
- Figur 3: Draufsicht auf die Rückseite der Sende- und Empfangsoptik gemäß Figur 2
- Figur 4: Vergrößerter Ausschnitt der Sende- und Empfangsoptik gemäß den Figuren 2 und 3.

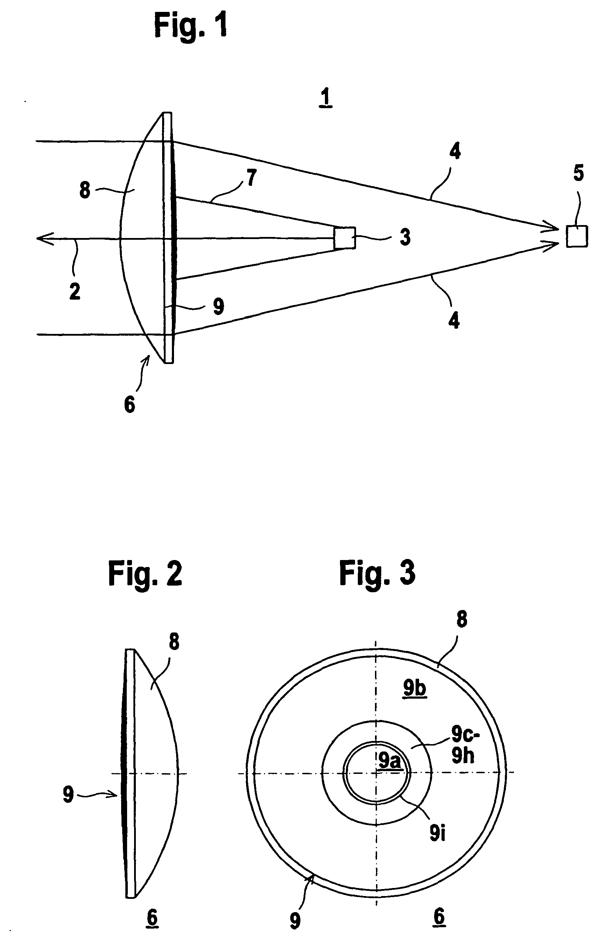

Figur 1 zeigt schematisch die optischen Komponenten eines optischen Sensors 1 zur Erfassung nicht gesondert dargestellter Objekte in einem Überwachungsbereich.

Der optische Sensor 1 ist als Distanzsensor ausgebildet, so dass mit diesem als Objektfeststellungssignal Distanzwerte von Objekten ermittelt und als Ausgangsgrößen ausgegeben werden. Der optische Sensor 1 weist einen Sendelichtstrahlen 2 emittierenden Sender 3 und einen Empfangslichtstrahlen 4 empfangenden Empfänger 5 auf, die an eine gemeinsame, nicht dargestellten Auswerteeinheit angeschlossen und in einem ebenfalls nicht dargestellten Gehäuse integriert sind. Die Auswerteeinheit dient zur Ansteuerung des Senders 3 und zur Auswertung der Empfangssignale des Empfängers 5 zur Generierung des Objektfeststellungssignals. Der Sender 3 besteht beispielsweise aus einer Laserdiode. Der Empfänger 5 ist von einer Avalanche-Photodiode gebildet. Die Auswerteeinheit besteht aus einem Mikroprozessor oder dergleichen. Die Entfemungsmessung erfolgt im vorliegenden Fall nach dem Phasenmessprinzip, wobei hierzu den Sendelichtstrahlen 2 eine Modulationsfrequenz aufgeprägt ist. Die Phasenverschiebung der von einem Objekt zurück reflektierten Empfangslichtstrahlen 4 zu den vom Sender emittierten Sendelichtstrahlen 2 wird in der Auswerteeinheit als Maß für die Objektdistanz ausgewertet.

Der Sender und der Empfänger sind koaxial angeordnet und liegen hinter einer Sende- und Empfangsoptik 6, die zugleich das Austrittsfenster für die Sendelichtstrahlen 2 und Empfangslichtstrahlen 4 in der Frontwand des Gehäuses bildet.

Die Sendelichtstrahlen 2 werden durch den zentralen Bereich der Sende- und Empfangsoptik 6 geführt, welcher zur Kollimation der Sendelichtstrahlen 2 dient. Die von dem Objekt zurückreflektierten Empfangslichtstrahlen 4 werden über die äußeren Bereiche der Sende- und Empfangsoptik 6 zum Empfänger 5 geführt. Da somit ein und dieselbe Sende- und Empfangsoptik 6 die Fokussierung der Empfangslichtstrahlen 4 und Kollimation der Sendelichtstrahlen 2 übernimmt, kann auf separate Sendeoptiken und Empfangsoptiken verzichtet werden.

Zur optischen Trennung der Sendelichtstrahlen 2 und Empfangslichtstrahlen 4 ist ein Tubus 7 aus nicht transparentem Material vorgesehen, in welchem der Sender 3 liegt. Somit werden die Sendelichtstrahlen 2 innerhalb des Tubus 7 und die Empfangslichtstrahlen 4 außerhalb des Tubus 7 geführt.

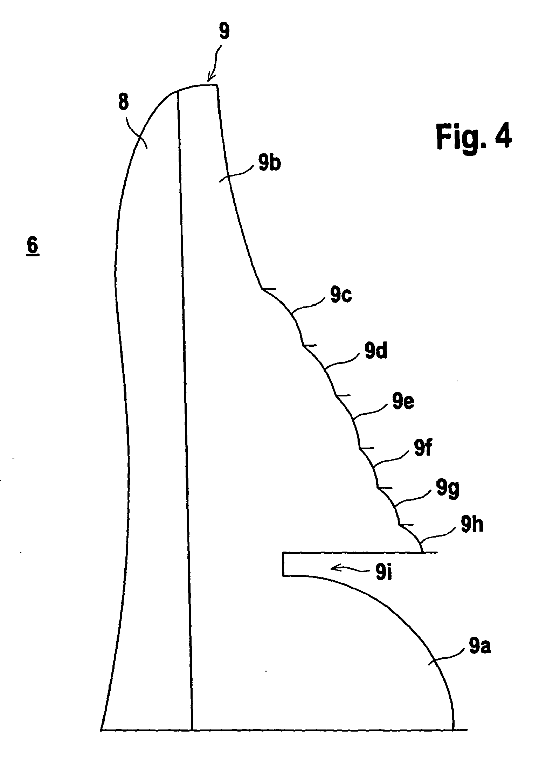

Die Figuren 2 und 3 zeigen die Sende- und Empfangsoptik 6 in einer Komplettdarstellung. Figur 4 zeigt einen vergrößerten Ausschnitt der Sende- und Empfangsoptik 6.

Wie aus den Figuren 2 bis 4 ersichtlich, besteht die Sende- und Empfangsoptik 6 aus einem Glassubstrat 8 und einer Schichtstruktur 9. Das an der Aussenseite des Gehäuses angeordnete Glassubstrat 8 bildet ein sphärisches Optikelement, wobei das Glassubstrat 8 im vorliegenden Fall als plankonvexe Linse ausgebildet ist. Auf die ebene Rückseite dieser Plankonvexlinse ist die Schichtstruktur 9 aufgebracht, die an den Innenraum des Gehäuses angrenzt.

Die Schichtstruktur 9 besteht aus Kunststoff, im vorliegenden Fall aus Diacryl. Die Herstellung der Schichtstruktur 9 erfolgt gemäß einem Replica-Verfahren. Zur Durchführung des Verfahrens wird auf die Rückseite der Plankonvexlinse eine Gießform aufgesetzt, deren Innenwand eine Kontur aufweist, welche den Strukturen der auszubildenden Schichtstruktur 9 entspricht. Das Diacryl zur Ausbildung der Schichtstruktur 9 wird in flüssiger Form in die Gießform eingeführt und dann mit UV-Strahlung ausgehärtet. Danach wird die Gießform abgenommen.

Die Schichtstruktur 9 weist eine Dicke von etwa 0,3 mm bis 1 mm auf und ist daher erheblich kleiner als die Dicke der Plankonvexlinse, die im cm-Bereich liegt. Wie insbesondere aus Figur 3 ersichtlich, erstreckt sich die Schichtstruktur 9 nahezu über die gesamte ebene Rückseite der Plankonvexlinse, wobei nur der äußerste Rand der Plankonvexlinse, bedingt durch das Aufsetzen der Gießform, von der Schichtstruktur 9 ausgespart ist.

Die Schichtstruktur 9 weist eine Mehrfachanordnung von konzentrisch angeordneten Segmenten auf, wobei die Segmente unterschiedliche aspährische Optikelemente bilden.

Ein im Zentrum der Sende- und Empfangsoptik 6 angeordnetes Segment bildet eine Kollimatorzone 9a, mittels derer eine Kollimation der Sendelichtstrahlen 2 erfolgt. Die Kollimatorzone 9a weist eine konvex gekrümmte Oberfläche auf und bewirkt eine asphärische Korrektur und Brennweitenkorrektur der Plankonvexlinse im zentralen Bereich.

Als weiteres asphärisches Optikelement ist im äußeren Bereich der Sende- und Empfangsoptik 6 eine Fembereichszone 9b vorgesehen, welche von einem weiteren Element der Schichtstruktur 9 gebildet ist. Mit der Fembereichszone 9b werden Empfangslichtstrahlen 4, die von Objekten aus großen Distanzen zurück reflektiert werden, auf den Empfänger 5 fokussiert. Dabei bildet die Fernbereichszone 9b der Schichtstruktur 9 eine asphärische Korrektur der Plankonvexlinse in diesem Bereich.

Zwischen der Kollimatorzone 9a und der Fembereichszone 9b sind als weitere asphärische Elemente der Schichtstruktur 9 mehrere, im vorliegenden Fall sechs Nahbereichszonen 9c bis 9 h vorgesehen. Prinzipiell können auch einzelne Nahbereichszonen als sphärische Optikelemente ausgebildet sein.

Mit den Nahbereichszonen 9c bis 9h erfolgt eine Fokussierung von Empfangslichtstrahlen 4, die von Objekten aus geringen Distanzen zurückreflektiert werden, auf den Empfänger 5. Durch die Abstufung der Schichtstruktur 9 in mehrere Nahbereichszonen erfolgt eine Korrektur der Plankonvexlinse in diesem Bereich derart, dass Objekte auch sehr dicht vor dem optischen Sensor 1 noch sicher erkannt werden können.

Wie insbesondere aus Figur 4 ersichtlich, ist die Dicke der Schichtstruktur 9 im Bereich der Nahbereichszonen 9c bis 9h größer als in der Fembereichszone 9b. Weiterhin nimmt die Dicke der Schichtstruktur 9 von der aussenliegenden Nahbereichszone 9c bis zur inneren Nahbereichszone 9h kontinuierlich zu. Jede der Nachbereichszonen 9c bis 9h weist eine konvex gekrümmte Oberfläche auf. Wie aus Figur 4 weiter ersichtlich ist die innere Nahbereichszone 9h von der Kollimatorzone 9a durch eine Einkerbung 9i getrennt.

### Bezugszeichenliste

- (1): Optischer Sensor
- (2): Sendelichtstrahlen
- (3): Sender
- (4): Empfangslichtstrahlen
- (5): Empfänger
- (6): Sende- und Empfangsoptik
- (7): Tubus
- (8): Glassubstrat
- (9): Schichtstruktur
- (9a): Kollimatorzone
- (9b): Fembereichszone
- (9c): Nahbereichszone
- (9d): Nahbereichszone
- (9e): Nahbereichszone
- (9f): Nahbereichszone
- (9g): Nahbereichszone
- (9h): Nahbereichszone
- (9i): Einkerbung

## Patentansprüche

1. Optischer Sensor (1) zum Erkennen von Objekten in einem Überwachungsbereich mit einem Sendelichtstrahlen (2) emittierenden Sender (3), einem Empfangslichtstrahlen (4) empfangenden Empfänger (5) und einer Auswerteeinheit zur Generierung eines Objektfeststellungssignals in Abhängigkeit der Empfangssignale am Ausgang des Empfängers (5), wobei der Sender (3) und der Empfänger (5) koaxial angeordnet und einer Sende- und Empfangsoptik (6) zugeordnet sind, wobei der zentrale Bereich der Sende- und Empfangsoptik (6) zur Kollimation der Sendelichtstrahlen (2) und der äußere Bereich zur Fokussierung der Empfangslichtstrahlen (4) auf den Empfänger (5) dient, und die Sende- und Empfangsoptik (6) aus einem Glassubstrat (8) mit einer darauf aufgebrachten Schichtstruktur (9) aus Kunststoff besteht.

2. Optischer Sensor (1) nach Anspruch 1, wobei das Glassubstrat (8) ein sphärisches Optikelement bildet.

3. Optischer Sensor (1) nach einem der Ansprüche 1 oder 2, wobei das Glassubstrat (8) eine sphärische Plankonvexlinse bildet.

4. Optischer Sensor (1) nach einem der Ansprüche 1 bis 3, wobei die Schichtstruktur (9) aspärische Optikelemente bildet.

5. Optischer Sensor (1) nach Anspruch 4, wobei die Optikelemente der Schichtstruktur (9) konzentrisch angeordnet sind.

6. Optischer Sensor (1) nach Anspruch 5, wobei ein im Zentrum der Sende- und Empfangsoptik (6) liegendes Segment der Schichtstruktur (9) eine Kollimatorzone (9a) für die Sendelichtstrahlen (2) bildet.

7. Optischer Sensor (1) nach einem der Ansprüche 5 oder 6, wobei ein im Randbereich der Sende- und Empfangsoptik (6) verlaufendes Segment der Schichtstruktur (9) eine Fernbereichszone (9b) für die Empfangslichtstrahlen (4) bildet.

8. Optischer Sensor (1) nach Anspruch 7, wobei zwischen der Kollimatorzone (9a) und der Fernbereichszone (9b) liegende Segmente der Schichtstruktur (9) Nahbereichszonen (9c, 9d, 9e, 9f, 9b, 9h) für die Empfangslichtstrahlen (4) bilden.

9. Optischer Sensor (1) nach einem der Ansprüche 1 bis 8, wobei der die Schichtstruktur (9) bildende Kunststoff Diacryl ist.

10. Optischer Sensor (1) nach Anspruch 9, wobei die Schichtstruktur (9) mittels eines Replica-Verfahrens auf das Glassubstrat (8) aufgebracht ist.

11. Optischer Sensor (1) nach Anspruch 10, wobei die Schichtstruktur (9) auf die Rückseite der Plankonvexlinse aufgebracht ist.

12. Optischer Sensor (1) nach einem der Ansprüche 1 bis 10, wobei dieser ein Distanzsensor ist.

## Claims

1. Optical sensor (1) for recognition of objects in a monitoring region, comprising a transmitter (3) emitting transmitted light beams (2), a receiver (5) receiving received light beams (4) and an evaluating unit for generating an object detection signal in dependence on the received signals at the output of the receiver (5), wherein the transmitter (3) and the receiver (5) are arranged coaxially and are associated with a transmitting and receiving optical system (6), wherein the central region of the transmitting and receiving optical system (6) serves for collimation of the transmitted light beams (2) and the outer region for focusing the received light beams (4) on the receiver (5), and the transmitting and receiving optical system (6) consists of a glass substrate (8) with a layer structure (9) of plastics material applied thereon.

2. Optical sensor (1) according to claim 1, wherein the glass substrate (8) forms a spherical optical element.

3. Optical sensor (1) according to one of claims 1 and 2, wherein the glass substrate (8) forms a spherical planoconvex lens.

4. Optical sensor (1) according to any one of claims 1 to 3, wherein the layer structure (9) forms aspherical optical elements.

5. Optical sensor (1) according to claim 4, wherein the optical elements of the layer structure (9) are arranged concentrically.

6. Optical sensor (1) according to claim 5, wherein a segment, which lies in the centre of the transmitting and receiving optical system (6), of the layer structure (9) forms a collimator zone (9a) for the transmitted light beams (2).

7. Optical sensor (1) according to one of claims 5 and 6, wherein a segment, which extends in the edge region of the transmitting and receiving optical system (6), of the layer structure (9) forms a far region zone (9b) for the received light beams (4).

8. Optical sensor (1) according to claim 7, wherein segments, which lie between the collimator zone (9a) and the far region zone (9b), of the layer structure (9) form near region zones (9c, 9d, 9e, 9f, 9b, 9h) for the received light beams (4).

9. Optical sensor (1) according to any one of claims 1 to 8, wherein the plastics material forming the layer structure (9) is diacryl.

10. Optical sensor (1) according to claim 9, wherein the layer structure (9) is applied to the glass substrate (8) by means of a replica method.

11. Optical sensor (1) according to claim 10, wherein the layer structure (9) is applied to the rear side of the planoconvex lens.

12. Optical sensor (1) according to any one of claims 1 to 10, wherein this is a distance sensor.

## Revendications

1. Capteur optique (1) pour la détection d'objets dans une zone de surveillance, comportant un émetteur (3) émettant des rayons lumineux d'émission (2), un récepteur (5) recevant des rayons lumineux de réception (4) et une unité d'évaluation pour générer un signal de détection d'objet en fonction des signaux de réception à la sortie du récepteur (5), dans lequel capteur optique (1) l'émetteur (3) et le récepteur (5) sont disposés coaxialement et associés à une optique d'émission et de réception (6), la zone centrale de l'optique d'émission et de réception (6) sert à la collimation des rayons lumineux d'émission (2) et la zone extérieure à la focalisation des rayons lumineux de réception (4) sur le récepteur (5), et l'optique d'émission et de réception (6) est formée d'un substrat en verre (8) sur lequel est appliquée une structure stratifiée (9) en matière plastique.

2. Capteur optique (1) selon la revendication 1, dans lequel le substrat en verre (8) forme un élément optique sphérique.

3. Capteur optique (1) selon une des revendications 1 ou 2, dans lequel le substrat en verre (8) forme une lentille plan-convexe sphérique.

4. Capteur optique (1) selon une des revendications 1 à 3, dans lequel la structure stratifiée (9) forme des éléments optiques asphériques.

5. Capteur optique (1) selon la revendication 4, dans lequel les éléments optiques de la structure stratifiée (9) sont disposés concentriquement.

6. Capteur optique (1) selon la revendication 5, dans lequel un segment de la structure stratifiée (9) situé au centre de l'optique d'émission et de réception (6) forme une zone de collimation (9a) pour les rayons lumineux d'émission (2).

7. Capteur optique (1) selon une des revendications 5 ou 6, dans lequel un segment de la structure stratifiée (9) s'étendant dans la zone de bord de l'optique d'émission et de réception (6) forme une zone de champ lointain (9b) pour les rayons lumineux de réception (4).

8. Capteur optique (1) selon la revendication 7, dans lequel des segments de la structure stratifiée (9) situés entre la zone de collimation (9a) et la zone de champ lointain (9b) forment des zones de champ proche (9c, 9d, 9e, 9f, 9g, 9h) pour les rayons lumineux de réception (4).

9. Capteur optique (1) selon une des revendications 1 à 8, dans lequel la matière plastique formant la structure stratifiée (9) est du diacryl.

10. Capteur optique (1) selon la revendication 9, dans lequel la structure stratifiée (9) est appliquée sur le substrat en verre (8) au moyen d'une méthode de réplique.

11. Capteur optique (1) selon la revendication 10, dans lequel la structure stratifiée (9) est appliquée au dos de la lentille plan-convexe.

12. Capteur optique (1) selon une des revendications 1 à 10, lequel est un capteur de distance.
